Europäisches Patentamt

European Patent Office

Office européen des brevets

(19)

(11) **EP 0 827 438 B1**

(12) **EUROPÄISCHE PATENTSCHRIFT**

(45) Veröffentlichungstag und Bekanntmachung des Hinweises auf die Patenterteilung:
**13.11.2002 Patentblatt 2002/46**

(21) Anmeldenummer: **97918029.6**

(22) Anmeldetag: **17.03.1997**

(51) Int Cl.$^7$: **B23K 35/30**, B23K 35/02

(86) Internationale Anmeldenummer:
**PCT/DE97/00541**

(87) Internationale Veröffentlichungsnummer:
**WO 97/034732 (25.09.1997 Gazette 1997/41)**

(54) **AMORPHE LEGIERUNG UND LÖTMITTEL AUS AMORPHER LEGIERUNG**

AMORPHOUS ALLOY AND SOLDER MADE FROM AMORPHOUS ALLOY

ALLIAGE AMORPHE ET BRASURE FABRIQUEE A PARTIR D'UN ALLIAGE AMORPHE

(84) Benannte Vertragsstaaten:
**DE DK FR GB IE IT SE**

(30) Priorität: **18.03.1996 DE 19610539**

(43) Veröffentlichungstag der Anmeldung:
**11.03.1998 Patentblatt 1998/11**

(73) Patentinhaber: **Vacuumschmelze GmbH**
**63450 Hanau (DE)**

(72) Erfinder:
• **BÖRNER, Veikko**
**D-63450 Hanau (DE)**
• **LUGSCHEIDER, Erich**
**D-52074 Aachen (DE)**
• **SCHMOOR, Hartmut**
**D-63793 Aschaffenburg (DE)**

(74) Vertreter: **Neunert, Peter Andreas et al**
**Westphal - Mussgnug & Partner**
**Patentanwälte**
**Waldstrasse 33**
**78048 Villingen-Schwenningen (DE)**

(56) Entgegenhaltungen:
**EP-A- 0 051 461       EP-A- 0 070 383**
**US-A- 4 801 072**

EP 0 827 438 B1

**Beschreibung**

Die vorliegende Erfindung betrifft eine Legierung und ein Lötmittel, das eine amorphe Legierung aufweist.

Amorphe Legierungen, die mindestens einige der Elemente Ni, Co, Fe, Mo, W, Cr, B, P, Si, C enthalten, sind beispielsweise aus der US-A-4 801 072 bekannt.

Aus der EP 0 522 699 ist ein Lötmittel bekannt, das eine gute Korrosionsbeständigkeit aufweist. Das Lötmittel ist frei von Eisengehalten und enthält als wesentliche Komponenten Ni und Cr. Wahlweise können die Elemente Si, B, Cu, Mo, Nb und Ta vorhanden sein. Das Lötmittel wird zum Verlöten von rostfreien Stählen verwendet.

Weiterhin ist in der EP 0 051 461 eine Legierung beschrieben, die zu mindestens 50% amorph ist. Die Legierung ist aus metallischen Komponenten wie Ni, Fe, Cr, Mo, W und Co sowie aus Metalloiden wie B, P, Si und C zusammengesetzt und weist duktile Eigenschaften auf, so daß sie als Lötmittel verwendet werden kann.

Um die Forderungen an die Korrosionsbeständigkeit einer Legierung zu erfüllen, ist ein relativ hoher Anteil von korrosionsbeständigen Elementen, wie beispielsweise Cr und/oder Mo erforderlich. Diese Elemente haben jedoch die Eigenschaft, mit den für die amorphe Legierung notwendigen Elementen wie Si, B und dergleichen harte Ausscheidungen, beispielsweise Boride und Silizide zu bilden. Diese harten Ausscheidungen wirken sich negativ auf die duktilen Eigenschaften der Legierung aus.

Ausgehend vom genannten Stand der Technik liegt der vorliegenden Erfindung die Aufgabe zugrunde, eine amorphe Legierung zu schaffen, bei der die genannten Nachteile vermieden werden. Insbesondere soll eine amorphe Legierung bereitgestellt werden, die sowohl duktile Eigenschaften als auch eine gute Korrosionsbeständigkeit aufweist.

Gemäß einem weiteren Aspekt der vorliegenden Erfindung soll ein Lötmittel bereitgestellt werden, das duktile Eigenschaften und eine gute Korrosionsbeständigkei besitzt und das insbesondere beim Hochtemperaturlöten stabile Lötverbindungen schafft.

Die Aufgabe wird erfindungsgemäß gelöst durch eine amorphe Legierung, mit einer Zusammensetzung, die der Formel $BA_a - KO_b - GL_c - ZU_d$ genügt, in der als Basiselemente mit BA die Elemente Ni, Fe und wahlweise Co bezeichnet sind, wobei die Legierung einen Eisen-Anteil $Fe_x$ von $7 \leq x \leq 20$ at% aufweist, in der als korrosionsbeständige Elemente mit KO mindestens eines der Elemente Cr, Mo, V, W, als Glasbildner mit GL mindestens eines der Elemente P, C, B, Si und mit ZU ein Zusatz weiterer Elemente einschließlich der üblichen Verunreinigungen bezeichnet ist und in der in at% folgendes gilt: $59 \leq a \leq 85$; $5 \leq b \leq 30$; $10 \leq c \leq 24$; $d \leq 5$; $c \leq 24 - 0,5 \cdot b$.

Die erfindungsgemäße amorphe Legierung weist eine ausreichende Duktilität bei gleichzeitiger guter Korrosionsbeständigkeit auf.

Durch die erfindungsgemäße Zusammensetzung der amorphen Legierung wird verhindert, daß die für die Korrosionsbeständigkeit erforderlichen Elemente wie Cr und/oder Mo mit den für die amorphen Eigenschaften der Legierung notwendigen Glasbildnern (z.B. Si und/oder B) harte Ausscheidungen wie beispielsweise Boride oder Silizide, insbesondere hochschmelzende Chrom- bzw. Molybdän-Boride bzw. -Silizide bilden. Derartige Ausscheidungen würden nämlich zu inhomogenen, spröden Bereichen in der erstarrten Legierung führen, insbesondere, wenn diese durch Rascherstarrung hergestellt wird. Die inhomogenen, spröden Bereiche beeinträchtigen die duktilen Eigenschaften der Legierung.

Durch einen Eisen-Anteil $Fe_x$ von $7 \leq x \leq 20$ at% wird weiterhin erreicht, daß die Bildung von hochschmelzenden harten Phasen vermindert wird. Derartige harte Phasen treten bei herkömmlichen Legierungen dann auf, wenn die amorphe Legierung erwärmt wird. Vor Erreichen des Schmelzpunkts geht die amorphe Phase in eine kristalline Phase über, wobei die harten Ausscheidungen gebildet werden. Durch den erfindungsgemäß eingestellten Eisen-Anteil werden die duktilen Eigenschaften der amorphen Legierung weiter verbessert.

Das Element Cr führt weiterhin zu einer Verbesserung des Korrosions- und Oxidationswiderstands, während die Elemente B und Si den Schmelzpunkt der Legierung herabsenken. Dabei gewährleistet der unter c genannte Gehaltsbereich, daß insbesondere bei Verwendung von B die Gießeigenschaften der Legierung nicht nachteilig beeinflußt und die Duktilität der Legierung verbessert werden. Die Verwendung von Mo in dem unter b genannten Gehaltsbereich verhindert eine Verschlechterung der Fließeigenschaften der erfindungsgemäßen Legierung.

Durch die Bedingung $c \leq 24 - 0.5 * b$ wird die Korrosionsbeständigkeit und die gute duktile Eigenschaft der Legierung im amorphen Zustand weiter verbessert.

Erfindungsgemäß kann für die amorphe Legierung zusätzlich die Bedingung $b + c + x \leq 36$ gelten. Diese Bedingung führt zu einer weiteren Verbesserung der Duktilität und der Korrosionsbeständigkeit der erfindungsgemäßen Legierung.

In einer bevorzugten Ausführungsform der Erfindung erfüllt die amorphe Legierung alle der vorgenannten Bedingungen.

In vorteilhafter Ausgestaltung der Erfindung weist der Zusatz weiterer Elemente ZU wenigstens ein Element auf, daß aus der Gruppe der Metalloide und Übergangsmetalle, vorzugsweise aus der Gruppe Al, Cl, F, Sn, Ge, In, Be, Sb, Pb, Mn, S, Ti, Ta, Nb ausgewählt ist.

Bevorzugt ist die erfindungsgemäße amorphe Legierung durch Rascherstarrung herstellbar.

Gemäß einem weiteren Aspekt der vorliegenden Erfindung weist ein Lötmittel mit duktilen Eigenschaften eine wie vorstehend beschriebene erfindungsgemäße amorphe Legierung auf.

Allgemein gilt für Lötmittel die Voraussetzung, daß sie einen Schmelzpunkt aufweisen müssen, der unterhalb des Schmelzpunkts derjenigen Teile liegt, die zusammengelötet werden sollen. Weiterhin muß daß Lötmittel sowohl chemisch als auch metallurgisch zu den zu verlötenden Teilen kompatibel sein.

Mit dem erfindungsgemäßen Lötmittel werden diese Voraussetzungen erfüllt. Zusätzlich weist das Lötmittel bei guter Duktilität eine gute Korrosionsbeständigkeit, insbesondere in wässrigen Lösungen auf.

Die wahlweise Verwendung von Mo, W und Co bei dem erfindungsgemäßen Lötmittel führt beispielsweise zu starken Verbindungskräften zwischen dem Lötmittel und den zu verlötenden Teilen. Auf diese Weise wird eine sichere, feste und starke Lötverbindung zwischen den Teilen sichergestellt.

Erfindungsgemäß kann das Lötmittel in Form eines Pulvers oder einer Paste ausgebildet sein.

In anderer Ausgestaltung der Erfindung kann das Lötmittel in Form einer Folie oder eines Bandes ausgebildet sein. Der Vorteil von Folien oder Bändern besteht darin, daß der erforderliche Zeitaufwand für die Durchführung des Lötverfahrens zum Teil erheblich verkürzt werden kann. Weiterhin kann die Verbindungsgenauigkeit bei den zu verlötenden Teilen erhöht und die Verbindungskraft zwischen der Lötfolie und den zu verlötenden Teilen verstärkt werden.

In vorteilhafter Ausgestaltung der Erfindung weist die Folie oder das Band eine Dicke von 25 - 80 μm, vorzugsweise eine Dicke von 35 - 50 μm aufweist.

Vorzugsweise wird das erfindungsgemäße Lötmittel zum Hochtemperaturlöten von Stählen und/oder Superlegierungen verwendet. Dabei kann das Lötmittel insbesondere auch zum Löten von rostfreien Stählen verwendet werden, die aufgrund ihres hohen Chromgehalts üblicherweise nur schwer zu verlöten sind.

In vorteilhafter Ausgestaltung der Erfindung kann das Lötmittel zum Löten unter Schutzgas und/oder im Vakuum und/oder in einem Temperaturbereich von etwa 900°C bis 1300°C verwendet werden. Das für das Löten unter Vakuum eingestellte Vakuum liegt beispielsweise bei $13.4 \times 10^{-3}$ Pa. Eine besonders vorteilhafte Löttemperatur liegt im Bereich um etwa 1150°C bis 1175°C.

Gemäß einer bevorzugten Ausführungsform der Erfindung wird eine durch Rascherstarrung herstellbare, duktile Lötfolie, bestehend aus einer Legierung, die mindestens einige der Elemente Ni, Co, Fe, Mo, W, Cr, B, P, Si, C enthält geschaffen, wobei die Legierung der Formel $BA_a$- $KO_b$- $GL_c$ - $ZU_d$ genügt, in der als Basiselemente mit BA die Elemente Ni, Fe und wahlweise Co bezeichnet sind, wobei die Legierung einen Eisen-Anteil $Fe_x$ von $7 \leq x \leq 20$ at% aufweist, in der als korrosionsbeständige Elemente mit KO mindestens eines der Elemente Cr, Mo, V, W, als Glasbildner mit GL mindestens eines der Elemente P, C, B, Si und mit ZU ein Zusatz weiterer Elemente einschließlich der üblichen Verunreinigungen bezeichnet ist und in der in at% folgendes gilt: $59 \leq a \leq 85$; $5 \leq b \leq 30$; $10 \leq c \leq 24$; $d \leq 5$.

Erfindungsgemäß wird ein Lötmittel mit Nickel und/oder Kobalt als Basismaterial geschaffen, das zum Hochtemperaturlöten im Bereich von etwa 900°C bis 1300°C geeignet ist und daß dabei stabile Lötverbindungen zwischen verschiedenen Stählen und Superlegierungen ergibt. Darüber hinaus ist das erfindungsgemäße Lötmittel beispielsweise als duktile Lötfolie und mit dem Verfahren der Rascherstarrung herstellbar und weist insbesondere in wässrigen Lösungen eine gute Korrosionsbeständigkeit auf.

Zusätzlich wird bei der Verwendung des erfindungsgemäßen Lötmittels zum Hochtemperaturlöten, wie vorstehend beschrieben, verhindert, daß harte Ausscheidungen gebildet werden, die die Lötstellen beeinträchtigen können. Derartige Ausscheidungen können bei herkömmlichen Lötmitteln dann auftreten, wenn bei Erwärmung des Lötmittels vor Erreichung des Schmelzpunkts die amorphe Phase zerstört wird und sich Kristalle bilden.

Durch die Verwendung des erfindungsgemäßen Eisengehalts in der das Lötmittel bildenden amorphen Legierung können vorteilhafte Lötungen insbesondere beim Hochtemperaturlöten unter Schutzgas oder Vakuum im Temperaturbereich von 900°C bis 1300°C erzielt werden.

Gemäß einem zusätzlichen Aspekt der Erfindung kann das erfindungsgemäße Lötmittel zum Hochtemperaturlöten von Wärmetauschern, insbesondere von Plattenwärmetauschern verwendet werden.

Wärmetauscher bestehen beispielsweise aus einer Reihe von Platten, die während des Zusammenbaus aneinandergelötet werden. Wärmetauscher werden auf verschiedenartige Art und Weise, beispielsweise als Ölkühler, Wärmepumpen und dergleichen verwendet. Hinzu kommt, daß die Wärmetauscher im Betrieb unterschiedlichen flüssigen Medien, Temperaturbereichen und Betriebsdrücken ausgesetzt werden. Sowohl die Bauteile der Wärmetauscher als auch die Lötstellen müssen diesen unterschiedlichen Anforderungen standhalten können. Dies erfordert insbesondere für das Lötmittel eine Zusammensetzung, die unter anderem gute Korrosions-, Bruch-, Ermüdungs- und Duktilitätseigenschaften aufweist. Die erfindungsgemäße amorphe Legierung, aus der das erfindungsgemäße Lötmittel zusammengesetzt ist, erfüllt auf vorteilhafte Weise all diese Voraussetzungen.

Die Erfindung wird nun anhand der nachfolgenden Beispiele unter Bezugnahme auf die Zeichnung näher erläutert. Es zeigen:

Fig.1 Verschiedene Zusammensetzungen erfindungsgemäßer Lötmittel;

Fig.2    Vergleichszusammensetzungen zu den erfindungsgemäßen Lötmitteln; und

Fig 3     ein Diagramm, in dem der Gehaltsbereich c der glasbildenden Elemente über dem Bereichsgehalt b der korrosionsbeständigen Elemente dargestellt ist.

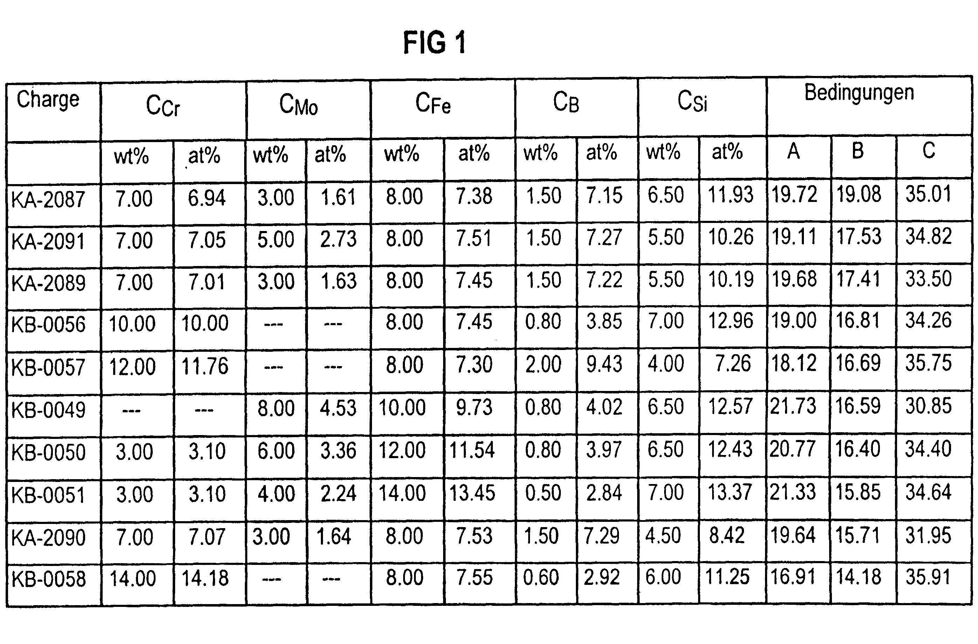

In der Fig. 1 sind eine Reihe von unterschiedlichen Legierungszusammensetzungen gemäß der vorliegenden Erfindung dargestellt, aus denen durch Rascherstarrung sehr gut homogene Lötfolien mit duktilen Eigenschaften und guter Korrosionsbeständigkeit herstellbar sind. Die Fig. 1 zeigt neben den Zusammensetzungen der einzelnen Legierungen die Bedingungen A, B und C.

Unter der Bedingung A sind die tatsächlichen Werte für den Ausdruck 24 - 0.5 * b angegeben. Unter der Bedingung B sind die tatsächlichen Gehaltsbereiche c der jeweiligen Legierungszusammensetzungen aufgeführt. Unter der Bedingung C sind die tatsächlichen Werte für den Ausdruck b + c + x angegeben.

Wie sich aus den in Fig. 1 gezeigten Werten ergibt, gilt für alle Legierungszusammensetzungen die Beziehung A ≤ B. Dies bedeutet, daß für alle aufgeführten Legierungen die Bedingung, daß c ≤ 24 - 0.5 * b sein soll, erfüllt ist. Weiterhin ergibt sich aus den Werten für die Bedingung C, daß bei allen angegebenen Legierungszusammensetzungen die Bedingung b + c + x ≤ 36 erfüllt ist.

Eine besonders vorteilhafte Legierungszusammensetzung, die als duktile Lötfolie verwendet werden kann, hat die Formel Ni7Cr8Fel.5B6.5Si3Mo. Die. aus dieser Legierung bestehenden Lötfolien zeigen insbesondere gute Korrosionseigenschaften sowie duktile Eigenschaften und erzeugen große Verbindungskräfte zwischen den zu verlötenden Teilen. Die Lötfolien haben vorteilhaft eine Dicke von etwa 30 mm und werden bei einer Temperatur von 1150°C verlötet.

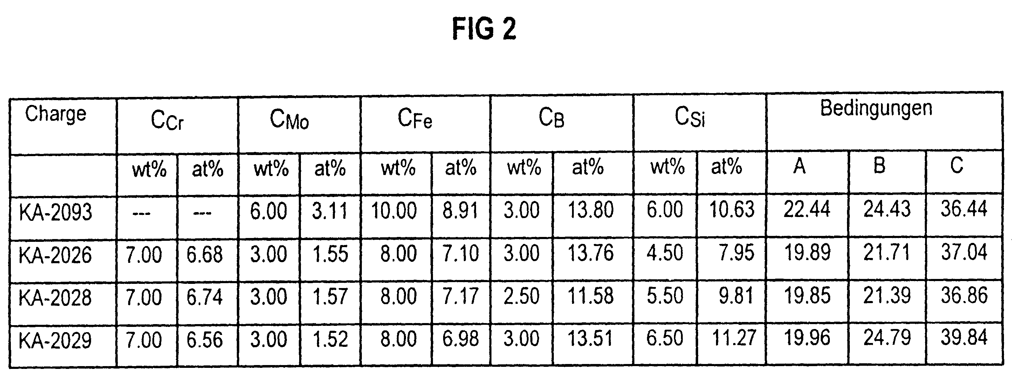

In Fig. 2 sind Vergleichslegierungszusammensetzungen zu den in Fig. 1 genannten erfindungsgemäßen Legierungszusammensetzungen dargestellt. Wie sich aus einer Untersuchung der für die Bedingungen A, B und C ermittelten Werte gemäß Fig. 2 ergibt, sind die für die Legierungen vorteilhaften Bedingungen und Beziehungen nicht erfüllt. Die abweichenden Ergebnisse kommen insbesondere deshalb zustande, weil der Borgehalt der Vergleichslegierungen um ein Vielfaches höher liegt als bei den erfindungsgemäßen Legierungen gemäß Fig. 1. Bei den in Fig. 2 genannten Legierungen können sich deshalb harte Ausscheidungen in Form von Boriden bilden, die sich nachteilig auf die Duktilität der Legierungen auswirken.

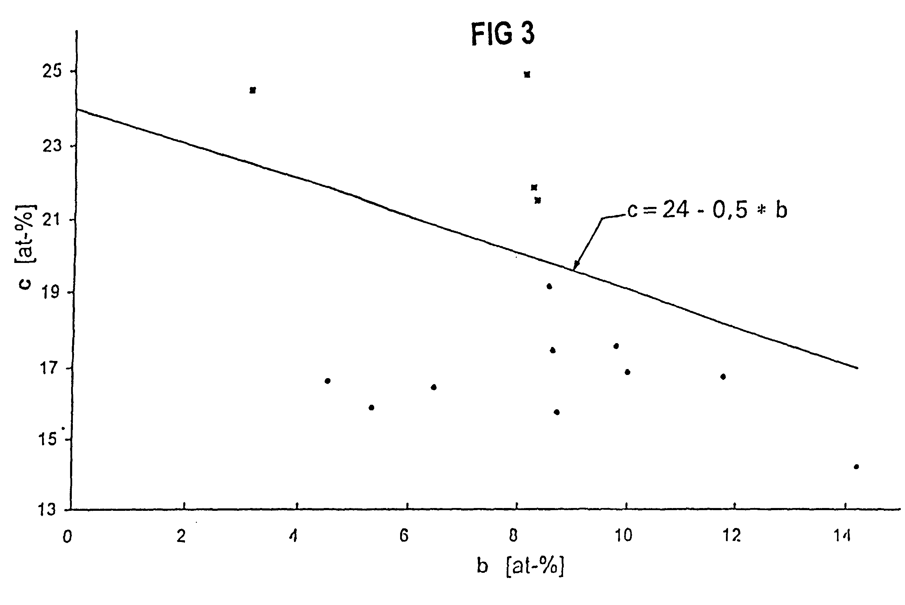

In Fig.3 ist für die in den Figuren 1 und 2 dargestellten Legierungen der Gehaltsbereich c der glasbildenden Elemente über dem Gehaltsbereich b der korrosionsbeständigen Elemente dargestellt. Die eingezeichnete Gerade kennzeichnet den maximalen Gehalt der glasbildenden Elemente, wenn die Bedingung c ≤ 24 - 0.5 * b erfüllt sein soll. Die runden Punkte zeigen das Verhältnis von b zu c bei den Legierungen nach Fig. 1, aus denen homogene Lötfolien mit duktilen und korrosionsbeständigen Eigenschaften herstellbar sind. Bei den rechteckigen Punkten handelt es sich um die entsprechenden Verhältnisse der Legierungen gemäß Fig. 2. Aus diesen Legierungen sind derartige vorteilhafte Lötfolien nicht herstellbar.

**Patentansprüche**

1. Amorphe Legierung, mit einer Zusammensetzung, die der Formel $BA_a$ -$KO_b$ -$GL_c$- $ZU_d$ genügt,

   in der als Basiselemente mit BA die Elemente Ni, Fe und wahlweise Co bezeichnet sind, wobei die Legierung einen Eisen-Anteil $Fe_x$ von $7 \leq x \leq 20$ at% aufweist, in der als korrosionsbeständige Elemente mit KO mindestens eines der Elemente Cr, Mo, V, W, als Glasbildner mit GL mindestens eines der Elemente P, C, B, Si und mit ZU ein Zusatz weiterer Elemente einschließlich der üblichen Verunreinigungen bezeichnet ist und in der in at% folgendes gilt:

$$59 \leq a \leq 85,$$

$$5 \leq b \leq 30,$$

$$10 \leq c \leq 24,$$

$$d \leq 5,$$

$$c \leq 24 - 0,5 \cdot b,$$

$$a + b + c + d = 100.$$

2. Amorphe Legierung nach Anspruch 1, **dadurch gekennzeichnet, daß** für die Legierung zusätzlich die Bedingung gilt:

$$b + c + x \leq 36.$$

3. Amorphe Legierung nach einem der Ansprüche 1 bis 2, **dadurch gekennzeichnet, daß** die Legierung durch Rascherstarrung herstellbar ist.

4. Amorphe Legierung nach einem der Ansprüche 1 bis 3, **dadurch gekennzeichnet, daß** der Zusatz weiterer Elemente ZU wenigstens ein Element aufweist, das aus der Gruppe der Metalloide und Übergangsmetalle, vorzugsweise aus der Gruppe Al, Cl, F, Sn, Ge, In, Be, Sb, Pb, Mn, S, Ti, Ta, Nb ausgewählt ist,

5. Lötmittel mit duktilen Eigenschaften, **dadurch gekennzeichnet, daß** das Lötmittel eine amorphe Legierung nach einem der Ansprüche 1 bis 4 aufweist.

6. Lötmittel nach Anspruch 5, **dadurch gekennzeichnet, daß** das Lötmittel in Form eines Pulvers oder einer Paste ausgebildet ist.

7. Lötmittel nach Anspruch 5, **dadurch gekennzeichnet, daß** das Lötmittel in Form einer Folie oder eines Bandes ausgebildet ist.

8. Lötmittel nach Anspruch 7, **dadurch gekennzeichnet, daß** die Folie oder das Band eine Dicke von 25 - 80 μm, vorzugsweise eine Dicke von 35 - 50 μm aufweist.

9. Verwendung des Lötmittels nach einem der Ansprüche 5 bis 8 zum Hochtemperaturlöten von Stählen und/oder Superlegierungen.

10. Verwendung des Lötmittels nach einem der Ansprüche 5 bis 9, **dadurch gekennzeichnet, daß** das Lötmittel zum Löten unter Schutzgas und/oder im Vakuum und/oder in einem Temperaturbereich von 900°C bis 1300°C verwendet wird.

11. Verwendung eines Lötmittels nach einem der Ansprüche 5 bis 10 zum Hochtemperaturlöten von Wärmetauschern.

12. Verwendung eines Lötmittels nach einem der Ansprüche 5 bis 11 zum Hochtemperaturlöten von Plattenwärmetauschern.

**Claims**

1. Amorphous alloy having a composition satisfying the formula $BA_a - KO_b - GL_c - ZU_d$, where BA designates the base elements Ni, Fe and possibly Co, the alloy having an iron content $Fe_x$ of $7 \leq x \leq 20$ atom %, KO designates at least one of the corrosion-resistant elements Cr, Mo, V and W, GL designates at least one of the glass-forming elements P, C, B and Si, ZU designates further added elements including the standard impurities and the following hold true in atom %:

$$59 \leq a \leq 85,$$

$$5 \leq b \leq 30,$$

$$10 \leq c \leq 24,$$

$$d \leq 5,$$

$$c \leq 24 - 0.5 \cdot b,$$

$$a + b + c + d = 100.$$

2. Amorphous alloy according to claim 1, **characterised in that** the condition

$$b + c + x \leq 36$$

additionally holds true for the alloy.

3. Amorphous alloy according to one of claims 1 to 2, **characterised in that** the alloy can be produced by rapid solidification.

4. Amorphous alloy according to one of claims 1 to 3, **characterised in that** the further added elements ZU comprise at least one element selected from the group consisting of metalloids and transition metals, preferably from the group consisting of Al, Cl, F, Sn, Ge, In, Be, Sb, Pb, Mn, S, Ti, Ta and Nb.

5. Solder with ductile properties, **characterised in that** the solder comprises an amorphous alloy according to one of claims 1 to 4.

6. Solder according to claim 5, **characterised in that** the solder is in the form of a powder or paste.

7. Solder according to claim 5, **characterised in that** the solder is in the form of a foil or tape.

8. Solder according to claim 7, **characterised in that** the foil or tape has a thickness of 25 - 80 μm, preferably a thickness of 35 - 50 μm.

9. Use of the solder according to one of claims 5 to 8 for the high-temperature brazing of steels and/or superalloys,

10. Use of the solder according to one of claims 5 to 9, **characterised in that** the solder is used for soldering in an inert-gas atmosphere and/or in vacuo and/or at a temperature within the range of 900°C to 1300°C.

**11.** Use of a solder according to one of claims 5 to 10 for the high-temperature brazing of heat exchangers.

**12.** Use of a solder according to one of claims 5 to 11 for the high-temperature brazing of plate heat exchangers.

**Revendications**

**1.** Alliage amorphe ayant une composition qui répond à la formule $BA_a$-$KO_b$-$Gl_c$-$ZU_d$, dans lesquelles l'élément de base, Ba, désigne les éléments Ni, Fe et au choix Co, l'alliage présentant une teneur en fer $Fe_x$ de $7 \leq x \leq 20$ % atomique, dans lesquelles les éléments résistant à la corrosion, KO, comportent au moins un des éléments Cr, Mo, V, W, comme vitrifiant, GL, P, C, B, Si et comme additifs, ZU, d'autres éléments y compris les impuretés habituelles, et où l'on a ce qui suit

$$50 \leq a \leq 85,$$

$$5 \leq b \leq 30,$$

$$10 \leq c \leq 24,$$

$$d \leq 5,$$

$$c \leq 24 - 0,5 \cdot b,$$

$$a + b + c + d = 100.$$

**2.** Alliage amorphe selon la revendication 1, **caractérisé en ce qu'** on a en outre pour l'alliage la condition suivante :

$$b + c + x \leq 36.$$

**3.** Alliage amorphe selon l'une des revendications 1 à 2, **caractérisé en ce que** l'alliage peut être produit par une solidification rapide.

**4.** Alliage amorphe selon une des revendications 1 à 3, **caractérisé en ce que** d'autres éléments ZU présentent au moins un élément qui est choisi dans le groupe des métalloïdes et des métaux de transition, de préférence dans le groupe Al, Cl. F. Sn, Ge, In, Be, Sb, Pb, Mn, S, Ti, Ta, Nb.

**5.** Brasure ayant des propriétés de ductilité, **caractérisée en ce que** la brasure présente une alliage amorphe selon une des revendications 1 à 4.

**6.** Brasure selon l'une des revendications 1 à 4, **caractérisée en ce que** la brasure est formée sous la forme d'une poudre ou d'une pâte.

**7.** Brasure selon la revendication 5, **caractérisée en ce que** la brasure est sous la forme d'une feuille ou d'un ruban.

**8.** Brasure selon la revendication 7, **caractérisée en ce que** la feuille ou le ruban présente une épaisseur de 25 à 80 μm, de préférence une épaisseur de 35 à 50 μm.

**9.** Utilisation de la brasure selon l'une des revendications 5 à 8, pour le soudage à haute température des aciers et/ou des superalliages.

**10.** Utilisation de la brasure selon la revendication 5 à 8, **caractérisé en ce que** la brasure est utilisée pour le soudage sous un gaz protecteur et/ou sous vide et/ou dans un intervalle de température allant de 900°C à 1300°C.

**11.** Utilisation d'une brasure selon l'une des revendications 5 à 8, pour le soudage à haute température d'échangeurs de chaleur.

**12.** Utilisation d'une brasure selon l'une des revendications 5 à 8, pour le soudage à haute température d'échangeurs de chaleur à plaques.

6

## FIG 1

| Charge | $C_{Cr}$ | | $C_{Mo}$ | | $C_{Fe}$ | | $C_B$ | | $C_{Si}$ | | Bedingungen | | |
|---|---|---|---|---|---|---|---|---|---|---|---|---|---|
| | wt% | at% | wt% | at% | wt% | at% | wt% | at% | wt% | at% | A | B | C |
| KA-2087 | 7.00 | 6.94 | 3.00 | 1.61 | 8.00 | 7.38 | 1.50 | 7.15 | 6.50 | 11.93 | 19.72 | 19.08 | 35.01 |
| KA-2091 | 7.00 | 7.05 | 5.00 | 2.73 | 8.00 | 7.51 | 1.50 | 7.27 | 5.50 | 10.26 | 19.11 | 17.53 | 34.82 |
| KA-2089 | 7.00 | 7.01 | 3.00 | 1.63 | 8.00 | 7.45 | 1.50 | 7.22 | 5.50 | 10.19 | 19.68 | 17.41 | 33.50 |
| KB-0056 | 10.00 | 10.00 | --- | --- | 8.00 | 7.45 | 0.80 | 3.85 | 7.00 | 12.96 | 19.00 | 16.81 | 34.26 |
| KB-0057 | 12.00 | 11.76 | --- | --- | 8.00 | 7.30 | 2.00 | 9.43 | 4.00 | 7.26 | 18.12 | 16.69 | 35.75 |
| KB-0049 | --- | --- | 8.00 | 4.53 | 10.00 | 9.73 | 0.80 | 4.02 | 6.50 | 12.57 | 21.73 | 16.59 | 30.85 |
| KB-0050 | 3.00 | 3.10 | 6.00 | 3.36 | 12.00 | 11.54 | 0.80 | 3.97 | 6.50 | 12.43 | 20.77 | 16.40 | 34.40 |
| KB-0051 | 3.00 | 3.10 | 4.00 | 2.24 | 14.00 | 13.45 | 0.50 | 2.84 | 7.00 | 13.37 | 21.33 | 15.85 | 34.64 |
| KA-2090 | 7.00 | 7.07 | 3.00 | 1.64 | 8.00 | 7.53 | 1.50 | 7.29 | 4.50 | 8.42 | 19.64 | 15.71 | 31.95 |
| KB-0058 | 14.00 | 14.18 | --- | --- | 8.00 | 7.55 | 0.60 | 2.92 | 6.00 | 11.25 | 16.91 | 14.18 | 35.91 |

EP 0 827 438 B1

# FIG 2

| Charge | $C_{Cr}$ | | $C_{Mo}$ | | $C_{Fe}$ | | $C_B$ | | $C_{Si}$ | | Bedingungen | | |
|---|---|---|---|---|---|---|---|---|---|---|---|---|---|
| | wt% | at% | wt% | at% | wt% | at% | wt% | at% | wt% | at% | A | B | C |
| KA-2093 | --- | --- | 6.00 | 3.11 | 10.00 | 8.91 | 3.00 | 13.80 | 6.00 | 10.63 | 22.44 | 24.43 | 36.44 |
| KA-2026 | 7.00 | 6.68 | 3.00 | 1.55 | 8.00 | 7.10 | 3.00 | 13.76 | 4.50 | 7.95 | 19.89 | 21.71 | 37.04 |
| KA-2028 | 7.00 | 6.74 | 3.00 | 1.57 | 8.00 | 7.17 | 2.50 | 11.58 | 5.50 | 9.81 | 19.85 | 21.39 | 36.86 |
| KA-2029 | 7.00 | 6.56 | 3.00 | 1.52 | 8.00 | 6.98 | 3.00 | 13.51 | 6.50 | 11.27 | 19.96 | 24.79 | 39.84 |

FIG 3

c = 24 - 0,5 * b

b [at-%]

c [at-%]

EP 0 827 438 B1